# EUROPÄISCHE PATENTSCHRIFT

(11) **EP 1 853 020 B1**
(45) Veröffentlichungstag und Bekanntmachung des Hinweises auf die Patenterteilung: **29.08.2018**
(21) Anmeldenummer: 06009063.6
(22) Anmeldetag: 02.05.2006
(51) Int. Cl.: H04L 29/06, H04L 29/08

(54) **Dezentraler Abwesenheitsassistent**
Decentralised absence assistant
Assistant décentralisé d'absence

(43) Veröffentlichungstag der Anmeldung: 07.11.2007
(73) Patentinhaber: Unify GmbH & Co. KG, 80807 München (DE)
(72) Erfinder: Hoffmann, Holger, 58239 Schwerte (DE)
(74) Vertreter: Fritzsche, Thomas

(56) Entgegenhaltungen:
- EP-A- 1 109 391
- WO-A-2005/050952
- WO-A1-2004/057846
- MATTHEWS NIMCAT NETWORKS B POUSTCHI NIMCAT NETWORKS P: "Industrial-Strength P2P SIP; draft-matthews-sipping-p2p-industrial-st rength-00.txt;" IETF STANDARD-WORKING-DRAFT, INTERNET ENGINEERING TASK FORCE, IETF, CH, 11. Februar 2005 (2005-02-11), XP015032234 ISSN: 0000-0004
- CAO F; BRYAN D A; LOWEKAMP B B: "Providing Secure Services in Peer-to-Peer Communications Networks with Central Security Servers" TELECOMMUNICATIONS, 2006. AICT-ICIW '06. INTERNATIONAL CONFERENCE ON INTERNET AND WEB APPLICATIONS AND SERVICES, 19. Februar 2006 (2006-02-19), Seiten 105-110, XP002385023 ISBN: 0-7695-2522-9

## Beschreibung

Die Erfindung betrifft einen dezentralen Abwesenheitsassistenten. Im Stand der Technik sind dezentrale Kommunikationssysteme bekannt, bei denen über das Kommunikationssystem verbundene Netzelemente wahlweise eine Rolle als Server bzw. als Client einnehmen.

Ein derartig agierendes Netzelement wird in Abgrenzung von einer üblichen Client-Server-Architektur auch als »Peer« bezeichnet, das Kommunikationssystem entsprechend als »Peer-to-Peer«-System bezeichnet. Unter einem Peer wird insbesondere ein im Verhältnis zu anderen Netzelementen eines Peer-to-Peer-Kommunikationssystems im wesentlichen »gleichberechtigtes« Netzelement verstanden, welches wechselweise oder gleichzeitig sowohl Client- als auch Server-Funktionen ausführt.

Schrift W0 2004/057846 offenbart ein dezentrales Peer-to-Peer-Kommunikationsnetzwerk mit einer Mehrzahl von Netzelementen und verteilter Voice-Mail-Funktionalität, wobei eine netzelementindividuelle Willkommensnachricht eines Netzelements auf weiteren, diesem Netzelement zugeordneten Backup-Netzelementen gespeichert werden kann. Falls das Netzelement ausfällt, übernimmt ein Backup-Netzelement für an das ausgefallene Netzelement gerichtete Rufe die Voicemail-Funktionalität. Schrift EP 1 109 391 A offenbart einen zentralen Voice-Mail-Server (VMS) in Zusammenarbeit mit einem Message Taking Server (MTS). Die Funktion der MTS-Applikation besteht in der temporären Speicherung einer Nachricht und anschließend deren Transferierung an den zentralen VMS. Die Lehre von EP 1 109 391 A entspricht damit einem dezidiert zentralen Serverkonzept zur Speicherung von Nachrichten, das jedoch keine Behandlung einer Umleitung einer Kommunikationsanforderung und der MTS-Funktionalität enthält.

In einer weiteren Veröffentlichung (P. MATTHEWS/NIMCAT NETWORKS, B. POUSTCHI/NIMCAT NETWORKS: "Industrial-strength P2P SIP, draft-matthews-sipping-p2p-industrial-strength-00.txt", IETF STANDARD-WORKING-DRAFT, INTERNET ENGINEERING TASK FORCE, IETF,CH,11.Februar 2005, XP 15032234,werden einige als herausfordernd betrachtete Leistungsmerkmale, um P2P-Netzwerke ebenso praktikabel zu machen wie existierende zentralisierte Telefondienste, und deren Auswirkungen auf die Struktur der Protokoll-Suite diskutiert, ohne jedoch detaillierte, konkrete weitere Problemlösungen vorzustellen.

Im Gegensatz zu einer klassischen Client-Server-Architektur bedeutet der Begriff »Client« im Zusammenhang eines Peer-to-Peer-Netzwerks eine Software, die einen Peer zur Teilnahme an einem Peer-to-Peer-Netzwerk befähigt.

Eine Begriffsabgrenzung dieses dezentralen Kommunikationssystems schließt im übrigen das Vorhandensein zentraler Instanzen wie z.B. einem Server nicht generell aus. Auch auf Mischformen von Kommunikationssystemen, bei denen bestimmte Aufgaben auf eine zentrale Instanz verlagert sind, wird mit der Bezeichnung dezentrales Kommunikationssystem bzw. Peer-to-Peer-Netzwerk Bezug genommen, soweit in diesem Netzwerk kein Server vorgehalten ist, über den *jegliche* Kommunikationsbeziehung zwischen zwei Netzelementen bzw. zwischen einem Netzelement und einem externen Kommunikationspartner zu führen ist.

Aus der zum Anmeldezeitpunkt noch unveröffentlichten, beim Deutschen Patent- und Markenamt hinterlegten Anmeldung mit dem Anmeldeaktenzeichen 10 2005 046 441.6 und dem Titel »Abwesenheitsassistent-System für multimediafähige Kommunikationssysteme« ist ein Abwesenheitsassistent bekannt, der sich dadurch auszeichnet, dass bei einer an ein Netzelement mit einem abwesenden Kommunikationsteilnehmer gerichteten Kommunikationsanforderung ein so genannter »Ersatzclient« ausgewählt wird, an den die eingehende Kommunikationsanforderung durchgestellt wird. Der Ersatzclient nimmt sodann die Kommunikationsanforderung entgegen und spielt eine entsprechende »Willkommensnachricht« ab. Das Verfahren zeichnet sich durch einen dezentralen Ansatz einer Verwaltung multimedialer Kommunikationsverbindungen in der Abwesenheit eines Kommunikationsteilnehmers aus.

Bedingt durch den dezentralen Ansatz besteht jedoch das Problem, dass ein Anrufer nicht eine, vom Kommunikationsteilnehmer definierte, »persönliche« Willkommensnachricht erhält.

Aufgabe der Erfindung ist es daher, Mittel in einem dezentralen Kommunikationssystem bereitzustellen, durch die ein rufender Teilnehmer im Zuge einer eingehenden Kommunikationsanforderung eine für den gerufenen Teilnehmer gespeicherte persönliche Nachricht auch in den Fällen erhält, in der das gerufene Netzelement aufgrund bestimmter Umstände wie z.B. Ausfall des Netzelements bzw. Ressourcenüberlastung des Netzelements momentan nicht verfügbar ist.

Die Aufgabe wird erfindungsgemäß durch ein als dezentraler Abwesenheitsassistent fungierendes Peer-to-Peer-Kommunikationssystem gemäß Patentanspruch 1 sowie durch ein entsprechendes Computerprogrammprodukt gemäß Patentanspruch 8 gelöst.

Der erfindungsgemäße Abwesenheitsassistent arbeitet im Umfeld eines dezentralen Kommunikationssystems, das beispielsweise als Peer-to-Peer-Netzwerk ausgestaltet ist. Bestandteil dieses Kommunikationssystems ist weiterhin eine verteilte, d.h. dezentrale Datenbank. Eine solche dezentrale Datenbank zeichnet sich dadurch aus, dass ihre Einträge und/oder ihre Organisationsstruktur auf die einzelnen Netzelemente im dezentralen Kommunikationssystem verteilt sind, dass also nicht unbedingt eine zentral anzusprechende Datenbank vorhanden ist.

Der wesentliche Aspekt des erfindungsgemäßen dezentralen Abwesenheitsassistenten besteht darin, dass an einem gerufenen ersten Netzelement Mittel zur Umleitung einer eingehenden Kommunikationsanforderung an ein zweites Netzelement und Mittel zur Übermittlung der gespeicherten netzelement-individuellen Nachricht des ersten Netzelement an das zweite Netzelement vorgesehen sind. Die netzelement-individuelle Nachricht entspricht dabei einer persönlichen Nachricht eines Teilnehmers am ersten Netzelement. Sie liegt bei einer Gestaltung der Nachricht für reine Sprachkanäle beispielsweise als eine gesprochene Willkommensnachricht vor, bei einer multimedialen Gestaltung als eine visuelle Begrüßungssequenz usw.

Ein wesentlicher Vorteil des erfindungsgemäßen Abwesenheitsassistenten ist der dezentrale Ansatz für eine Verwaltung von Kommunikationsverbindungen in Abwesenheit eines gerufenen Kommunikationsteilnehmers an seinem zugeordneten ersten Netzelement. Der erfindungsgemäße Abwesenheitsassistent weist in vorteilhafter Weise ebenfalls eine dezentrale Architektur auf. Damit wird bewusst auf die im Stand der Technik bekannten Abwesenheitsassistenten mit einer zentralen Architektur verzichtet, die bei Ausfall des Zentralsystems einen kommunikationssystemsweiten Ausfall der Abwesenheitsannahme nach sich ziehen.

Der dezentrale Ansatz kann dabei vorteilhaft zur Speicherung und Übertragung der mit den eingehenden Kommunikationsanforderungen ausgetauschten Nutzdaten effektiv genutzt werden.

Ein wesentlicher Vorteil des erfindungsgemäßen Abwesenheitsassistenten besteht weiterhin darin, dass eine eingehende Kommunikationsanforderung eine für den gerufenen Teilnehme netzelement-individuelle erste Nachricht auch dann erhält, wenn das erste Netzelement als eigentlicher Speicherort der ersten Nachricht für eine Entgegennahme der Kommunikationsanforderung vorübergehend oder dauerhaft nicht verfügbar ist.

Weitere Vorteile und Ausgestaltungen der Erfindung sind Gegenstand der Unteransprüche.

Gemäß einer vorteilhaften Ausgestaltung des erfindungsgemäßen Abwesenheitsassistenten sind mit der dezentralen Datenbank zusammenwirkende Mittel zur Bestimmung des zweiten Netzelements als Umleitungsziel der Kommunikationsanforderung vorgesehen. Die genannten Mittel ermöglichen dabei eine gezielte Auswahl des Umleitungsziels. Die Auswahl erfolgt dabei beispielsweise auf Basis der Tatsache, dass das ausgewählte zweite Netzelement bereits in der Vergangenheit als Umleitungsziel ausgewählt wurde und die netzelement-individuelle erste Nachricht des ersten Netzelements noch in einem Speicher des zweiten Netzelements vorgehalten wurde. Ein weiteres mögliches Kriterium für eine Auswahl des zweiten Netzelements als Umleitungsziel ist eine Geeignetheit für die eingehende Kommunikationsanforderung hinsichtlich der verwendeten Medienwege. Als Medienwege kommen hierbei beispielsweise eine reine Sprachverbindung oder auch eine Videodatenverbindung in Frage. Schließlich kann als weiteres Kriterium noch eine Verfügbarkeit von Ressourcen am zweiten Netzelement dienen.

Eine weitere vorteilhafte Ausgestaltung der Erfindung betrifft im zweiten Netzelement eingerichtete Mittel zur Anforderung der Übermittlung der gespeicherten netzelement-individuellen ersten Nachricht des ersten Netzelements. In einer Ausführungsform ist dabei beispielsweise vorgesehen, dass das zweite Element eine Routine anstößt, welche das erste Netzelement zur Übermittlung der ersten Nachricht auffordert.

Ist diese Aufforderung zur Übermittlung der ersten Nachricht erfolglos oder bleibt die Übermittlung der ersten Nachricht am zweiten Netzelement aus anderen Gründen aus, sind in einer weiteren vorteilhaften Ausgestaltung der Erfindung im zweiten Netzelement eingerichtete Mittel vorgesehen, welche in diesen Fällen eine generische Nachricht anfordern. Eine solche generische Nachricht ist beispielsweise eine Kommunikationssystemweit vorgesehene Begrüßungsnachricht, welche nicht auf einen einzelnen Teilnehmer personalisiert ist. Eine Anforderung kann dabei auch am eigenen Netzelement erfolgen, an dem diese generische Nachricht gespeichert ist.

Eine weitere vorteilhafte Ausgestaltung der Erfindung betrifft eine Aufnahme und Speicherung einer vom rufenden Teilnehmer übermittelten zweiten Nachricht im zweiten Netzelement. Eine solche zweite Nachricht ist beispielsweise ein für den Teilnehmer des ersten Netzelements hinterlassene Sprachnachricht mit einer Bitte um Rückruf durch den rufenden Teilnehmer.

Diese zweite Nachricht wird in vorteilhafter Weise an das erste Netzelement und damit an das eigentliche Netzelement des gerufenen Teilnehmers übermittelt, sofern die zuvor beschriebenen Umstände für einen vorübergehenden Ausfall oder für eine vorübergehende Beeinträchtigung des ersten Netzelements mittlerweile behoben sind. In vorteilhafter Weise sind daher Anforderungsmittel zur Anforderung der Übermittlung der zweiten Nachricht an das erste Netzelement vorgesehen. Diese Anforderungsmittel werden beispielsweise aktiviert, sobald ein vorübergehender Ressourcenengpass am ersten Netzelement beseitigt sind und das erste Netzelement damit für eine Aufnahme und Speicherung der für den Teilnehmer am ersten Netzelement vorgesehenen Nachricht bereit ist. In vorteilhafter Weise sind im weiteren Detektionsmittel zur Detektion von am ersten Netzelement verfügbaren Ressourcen vorgesehen, welche mit den oben genannten Anforderungsmitteln zusammenwirken.

In vorteilhafter Weise sind die vorbeschriebenen Mittel in einem Computerprogrammprodukt implementiert, welches an einem Netzelement zur Ausführung gebracht wird. In dezentralen Kommunikationssystemen weisen die Netzelemente üblicherweise eine identische Ausgestaltung an Software aus, so dass das Computerprogrammprodukt üblicherweise an einer Mehrzahl von Netzelementen zur Ausführung gebracht wird.

Ein Ausführungsbeispiel mit weiteren Vorteilen und Ausgestaltungen der Erfindung wird im folgenden anhand der Zeichnung näher erläutert.

Dabei zeigen:
- Fig. 1:: Ein Strukturbild zur schematischen Darstellung eines dezentralen Kommunikationssystems;
- Fig. 2:: Ein schematisches Blockschaltbild mit für die Beschreibung der Erfindung wesentlichen Funktionskomponenten eines ersten Netzelements;
- Fig. 3:: Ein schematisches Ablaufdiagramm für eine eingehende Kommunikationsanforderung und deren Umleitung auf ein zweites Netzelement.

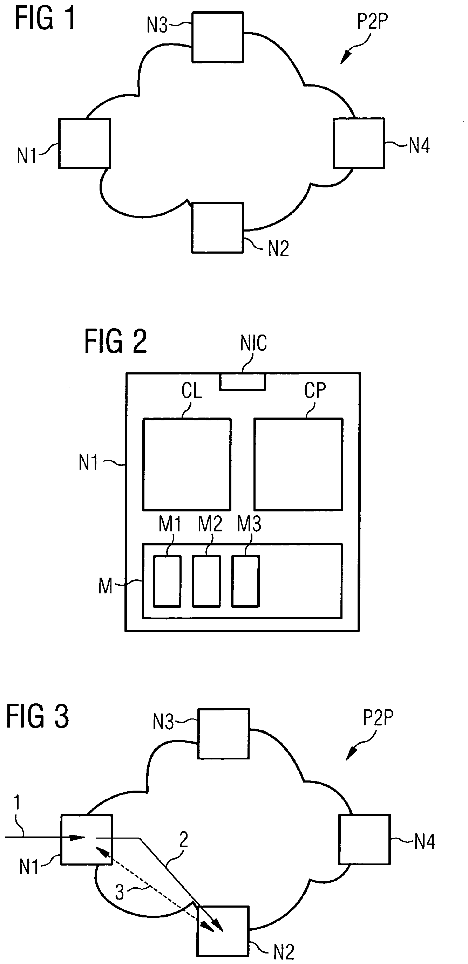

In **Fig. 1** ist ein dezentrales Netzwerk P2P bzw. dezentrales Kommunikationssystem P2P, bestehend aus einem ersten Netzelement N1, einem zweiten Netzelement N2, sowie einem weiteren, im folgenden nicht weiter betrachteten dritten und vierten Netzelementen N3,N4, dargestellt. Die Anzahl der Netzelemente ist dabei unerheblich.

Der Begriff »dezentral« bedeutet in diesem Zusammenhang insbesondere, dass keine zentrale Stelle, wie beispielsweise ein Server vorgesehen ist, durch welche Kommunikationsverbindungen sowie administrative Aufgaben *ausschließlich* gesteuert werden. Eine Architektur eines solchen dezentralen Netzwerks P2P schließt im übrigen das Vorhandensein zentraler Instanzen nicht generell aus. Auch auf Mischformen von Netzwerken, bei denen bestimmte Aufgaben auf eine zentrale Instanz verlagert sind, wird mit der Bezeichnung dezentrales Netzwerk P2P bzw. Peer-to-Peer-Netzwerk Bezug genommen, soweit in diesen Netzwerken kein Server vorgehalten ist, über den jegliche Kommunikationsbeziehung zwischen zwei Netzelementen N1,N2,N3,N4 zu führen ist. In diesem Sinne kann das dezentrale Kommunikationssystem P2P auch - nicht dargestellte - zentrale Funktionseinheiten enthalten, ohne das grundsätzlich dezentrale Architekturprinzip zu verletzen. Eine solche zentrale Funktionseinheit könnte beispielsweise ein - nicht dargestelltes - Gateway als Schnittstelle des dezentralen Kommunikationssystems P2P zu anderen leitungsvermittelnden oder gleichfalls paketorientierten - nicht dargestellten - Kommunikationssystemen sein.

Im Gegensatz zu einer Client-Server-Architektur bedeutet der Begriff »Client« im Zusammenhang eines Peer-to-Peer-Netzwerks P2P eine Software, die einen Peer, d.h. ein Netzelement N1...N4 zur Teilnahme an einem Peer-to-Peer-Netzwerk P2P befähigt.

Die dargestellten Netzelemente N1...N4 sind beispielsweise über ein LAN (Local Area Network) oder über ein drahtloses WLAN (Wireless Local Area Network) untereinander verbunden. Auf jedem Netzelement N1...N4 wird eine Applikation zum Ablauf gebracht, welche das Netzelement N1...N4 zur Teilnahme an dem dezentralen »Overlay«-Netzwerk P2P befähigt.

Die Netzelemente N1...N4 sind dabei wahlweise im Wesentlichen als Kommunikationsendgeräte - also beispielsweise mobile Kommunikationsendgeräte oder Systemtelefone mit erweiterten Bedienungsoptionen - oder im wesentlichen als Rechnereinheiten wie z.B. Desktop-PC, PDA (Personal Digital Assistent) ausgestaltet.

Im Folgenden wird von einer eingehenden Kommunikationsanforderung an einem Netzelement N1...N4 ausgegangen, bei der die Kommunikationsanforderung entweder als Echtzeitkommunikationsanforderung (Realtime Communication) oder auch als Nicht-Echtzeitkommunikationsanforderung, wie z.B. einer eintreffenden Mail zu verstehen ist.

Die weitere Figurenbeschreibung erfolgt unter weiterer Bezugnahme auf die Funktionseinheiten von jeweils vorausgehenden Figuren. Identische Bezugszeichen in verschiedenen Figuren repräsentieren hierbei identische Funktionseinheiten.

**Fig. 2** zeigt ein Ausführungsbeispiel für einen inneren Aufbau eines ersten Netzelements N1 auf Basis eines schematischen Blockschaltbildes. Das erste Netzelement N1 weist als Hauptbestandteil eine Client-Software CL auf, welche das erste Netzelement N1 zur Teilnahme und zur Kommunikation am dezentralen Kommunikationssystem P2P befähigt.

Ein weiterer Hauptbestandteil des ersten Netzelements ist eine Kommunikationssteuerungseinheit CP (Call Processing), welche in Zusammenarbeit mit der Client Software CL im Wesentlichen einen Aufbau und eine Unterhaltung und Handhabung von Kommunikationsverbindungen steuert.

Als physikalische Schnittstelle des ersten Netzelements N1 zum dezentralen Kommunikationssystem P2P dient eine Netzwerkschnittstelle NIC.

Weitere Bestandteile des ersten Netzelements N1 ist ein Speicherbereich M, welche in logische Speichersegmente M1, M2, M3... unterteilt ist.

Ein erster Speichersegment M1 dient beispielsweise einem Eintrag von Datenbankeinträgen einer über eine Mehrzahl von Netzelementen N1...N4 verteilten dezentralen Datenbank.

Ein zweites Speichersegment M2 dient beispielsweise einer Aufnahme einer netzelement-individuellen ersten Nachricht, welche von einem in der Kommunikationssteuerungseinheit CP realisierten Abwesenheitsassistenten bei einer eingehenden Kommunikationsanforderung ausgegeben wird.

Das dritte Speichersegment M3 dient beispielsweise einer Speicherung einer zweiten Nachricht, welche für den Teilnehmer des ersten Netzelements N1 von einem rufenden Teilnehmer als Nachricht hinterlassen wird.

**Fig. 3** zeigt ein schematisches Ablaufdiagramm, bei dem am ersten Netzelement N1 eine eingehende Kommunikationsanforderung 1 eintrifft. Aufgrund der dezentralen Natur des Kommunikationssystems P2P muss das die Kommunikationsanforderung 1 zunächst entgegennehmende Netzelement N1 nicht unbedingt das Ziel dieser Kommunikationsanforderung 1 sein. Im Folgenden wird jedoch davon ausgegangen, dass das erste Netzelement N1, welches die Kommunikationsanforderung 1 entgegengenommen hat, auch das Kommunikationsziel der eingehenden Kommunikationsanforderung ist.

Im Folgenden wird nun davon ausgegangen, dass aufgrund besonderer Umstände ein Kommunikationsteilnehmer am ersten Netzelement N1 oder das erste Netzelement N1 selbst nicht in der Lage ist, die eingehende Kommunikationsanforderung 1 zu bearbeiten. Ein solcher Fall tritt beispielsweise ein, wenn am Netzelement N1 die maximale Anzahl von Sprachkanälen überschritten wurde oder wenn am ersten Netzelement N1 eine Überschreitung der dort verfügbaren Ressourcen zu verzeichnen ist.

Erfindungsgemäß erfolgt in einem solchen Fall eine Umleitung 2 auf das zweite Netzelement N2. Das zweite Netzelement N2 wird zuvor im Zuge einer Anfrage der dezentralen Datenbank ermittelt. Ein Grund für die Auswahl des zweiten Netzelements N2 als Umleitungsziel ist z.B. eine dort ausreichende Ressourcenkapazität.

Das zweite Netzelement N2 nimmt die umgeleitete Kommunikationsanforderung 2 entgegen und führt optional eine weitere Anfrage an der dezentralen Datenbank bezüglich der für das erste Netzelement N1 eingestellten Abwesenheitsassistenz-Parameter durch. Zu diesen Parametern zählen beispielsweise die eingestellte Rufannahmezeit am ersten Netzelement N1, eine Aktivierung oder Nichtaktivierung einer Überwachung (Monitoring) oder auch das Medienformat, in dem das erste Netzelement N1 eine eingehende Kommunikationsanforderung zu bearbeiten in der Lage ist, z.B. nur Sprachkommunikation oder auch Videokommunikation, beide Echtzeitkommunikation.

Das zweite Netzelement N2 fordert nun die am ersten Netzelement N1 gespeicherte netzelement-individuelle erste Nachricht bzw. »Willkommensnachricht« in Form einer in der Zeichnung strichliert dargestellten Anforderungsnachricht 3 an. Diese Anforderungsnachricht 3 ist optional. In einer alternativen Ausführung erfolgt eine Übermittlung der gespeicherten netzelement-individuellen ersten Nachricht vom ersten Netzelement N1 an das zweite Netzelement N2 ohne eine entsprechende Anforderung durch das zweite Netzelement N2 und ausgelöst durch die zuvor erfolgte Umleitung 2 auf das zweite Netzelement N2.

Die Übermittlung der ersten netzelement-individuellen Nachricht vom ersten Netzelement N1 an das zweite Netzelement N2 erfolgt mittels bekannter Maßnahmen zum Datenaustausch, beispielsweise unter Verwendung der Protokolle FTP (File Transfer Protocol), UDP (User Datagram Protocol) usw. Trifft diese netzelementindividuelle Nachricht innerhalb eines einstellbaren Zeitraums am zweiten Netzelement N2 ein, wird diese Nachricht am zweiten Netzelement N2 gespeichert und durch Abspielen dieser Nachricht die eingehende Kommunikationsanforderung 1 am zweiten Netzelement N2 entgegengenommen. Trifft dagegen diese netzelementindividuelle erste Nachricht nicht innerhalb des einstellbaren Zeitraums ein, wird dem rufenden Teilnehmer eine generische bzw. Standardbegrüßungsnachricht eingespielt. Für den rufenden Teilnehmer ist nicht erkennbar, welches Netzelement N1...N4 innerhalb des Kommunikationssystems P2P die Kommunikationsanforderung entgegennimmt.

Nach Beendigung der abgespielten Nachricht am zweiten Netzelement N2 ist optional vorgesehen, dass der rufende Teilnehmer eine Nachricht hinterlässt, welche nun am zweiten Netzelement N2 aufgenommen und gespeichert wird. Die gespeicherte zweite Nachricht wird nach Beendigung der Kommunikationsbeziehung und unter der Voraussetzung, dass das erste Netzelement N1 zu einer Übermittlung in der Lage ist, an das erste Netzelement N1 übermittelt. Die erste Nachricht wird optional daraufhin am zweiten Netzelement N2 gelöscht. Ein entsprechender Löschvorgang erfolgt z.B. dann, wenn aufgrund eines Speicherplatzbedarfes am zweiten Netzelement N2 eine freiwerdende Speicherkapazität erforderlich ist.

Bis zu diesem Löschvorgang kann die erste Nachricht optional am zweiten Netzelement N2 gespeichert bleiben, so dass bei einer erneuten eingehenden Kommunikationsanforderung am ersten Netzelement N1 und der beschriebenen Umleitung 2 auf das zweite Netzelement N2 eine Übermittlung der netzelement-individuellen ersten Nachricht vom ersten Netzelement N1 in vorteilhafter Weise entfallen kann. Stattdessen kann die umgeleitete Kommunikationsanforderung 2 unmittelbar mit der netzelement-individuellen ersten Nachricht des ersten Netzelements N1 entgegengenommen werden.

Für den Fall, dass der dem ersten Netzelement N1 zugehörige Teilnehmer eine Änderung an seiner netzelement-individuellen ersten Nachricht vornimmt, werden alle Netzelemente N1...N4 in vorteilhafter Weise über diese Änderung informiert. Im Zuge dessen wird in einer vorteilhaften Ausgestaltung der Erfindung die netzelement-individuelle erste Nachricht, welche zuvor an andere Netzelemente N2 übermittelt wurde, an diesen Netzelementen N2 gelöscht.

Ein solches Löschen von gespeicherten netzelement-individuellen Nachrichten in den Netzelementen N1...N4 erfolgt in vorteilhafter Weise auch bei einem Systemstart des jeweiligen Netzelement N1...N4. Ein solches Vorgehen stellt sicher, dass nur die am zugehörigen Netzelement N1 gespeicherte netzelement-individuelle erste Nachricht als die gültige gilt.

Mit den Mitteln der Erfindung ist eine individuelle Ansage in einem Abwesenheitsassistenten auch dann möglich, wenn das eigene Netzelement N1 nicht für eine Bearbeitung einer eingehenden Kommunikationsanforderung in der Lage ist. Weiterhin ist ein Aufbau von Teilnehmergruppen mit einheitlicher Darstellung möglich. Dies ermöglicht eine einheitliche Präsentation aller Teilnehmer des Kommunikationssystems P2P in Bezug auf einen rufenden Teilnehmer.

## Patentansprüche

1. Als dezentraler Abwesenheitsassistent fungierendes dezentrales Peer-to-Peer-Kommunikationssystem, umfassend
- mindestens zwei Netzelemente (N1,N2,N3,N4),
- eine auf den mindestens zwei Netzelementen (N1,N2,N3,N4) verteilt organisierte dezentrale Datenbank,
- mindestens eine auf dem jeweiligen Netzelement (N1,N2,N3,N4) gespeicherte und bei der Entgegennahme einer Kommunikationsanforderung zu verwendende netzelementindividuelle erste Nachricht, und an mindestens einem ersten Netzelement (N1) der mindestens zwei Netzelemente vorgesehene
- Mittel zur Umleitung einer eingehenden Kommunikationsanforderung an ein zweites Netzelement (N2) der mindestens zwei Netzelemente für den Fall, dass aufgrund eines Ressourcenengpasses am ersten Netzelement dieses zu einer Bearbeitung der Kommunikationsanforderung nicht in der Lage ist,
- mit der dezentralen Datenbank zusammenwirkende Mittel zur Bestimmung des zweiten Netzelements (N2) als Umleitungsziel der Kommunikationsanforderung und
- Mittel zur Übermittlung der gespeicherten netzelement-individuellen ersten Nachricht des ersten Netzelements (N1) an das zweite Netzelement (N2) .

2. Peer-to-Peer-Kommunikationssystem nach Anspruch 1, **gekennzeichnet durch** im zweiten Netzelement (N2) eingerichtete Mittel zur Anforderung der Übermittlung der gespeicherten netzelement-individuellen ersten Nachricht des ersten Netzelements (N1).

3. Peer-to-Peer-Kommunikationssystem nach Anspruch 2, **gekennzeichnet durch** im zweiten Netzelement (N2) eingerichtete Mittel zur Anforderung einer generischen Nachricht im Falle einer ausbleibenden Übermittlung der gespeicherten netzelement-individuellen ersten Nachricht des ersten Netzelements (N1).

4. Peer-to-Peer-Kommunikationssystem nach einem der vorstehenden Ansprüche,
**gekennzeichnet durch**
im zweiten Netzelement (N2) eingerichtete Mittel zur Aufnahme und Speicherung einer während einer sich an die eingehende Kommunikationsanforderung anschließenden Kommunikationsbeziehung übermittelten, zweiten Nachricht.

5. Peer-to-Peer-Kommunikationssystem nach Anspruch 4, **gekennzeichnet durch** im zweiten Netzelement (N2) eingerichtete Mittel zur Übermittlung der zweiten Nachricht an das erste Netzelement.

6. Peer-to-Peer-Kommunikationssystem nach einem der Ansprüche 4 bis 5,
**gekennzeichnet durch**
Anforderungsmittel zur Anforderung der Übermittlung der zweiten Nachricht an das erste Netzelement (N1).

7. Peer-to-Peer-Kommunikationssystem nach Anspruch 6, **gekennzeichnet durch** Detektionsmittel zur Detektion verfügbarer Ressourcen auf dem ersten Netzelement (N1) und zur Einwirkung auf das Anforderungsmittel zur Anforderung der Übermittlung der zweiten Nachricht an das erste Netzelement (N1).

8. Computerprogrammprodukt mit Programmcode zur Realisierung eines Peer-to-Peer-Kommunikationssystems gemäß einem der vorhergehenden Ansprüche.

## Claims

1. A decentralized peer-to-peer communication system functioning as a decentralized absence assistant, comprising
- at least two network elements (N1, N2, N3, N4),
- a decentralized database organized in a distributed manner on the at least two network elements (N1, N2, N3, N4),
- at least one network-element-individual first message, which is stored on the respective network element (N1, N2, N3, N4) and is to be used upon receiving a communication request, and
- means, which is provided on at least one first network element (N1) of the at least two network elements, for redirecting an incoming communication request to a second network element (N2) of the at least two network elements for the case that it is not capable of processing the communication request because of a resource bottleneck at the first network element,
- means interacting with the decentralized database for determining the second network element (N2) as the redirection destination of the communication request, and
- means for transmitting the stored network-element-individual first message of the first network element (N1) to the second network element (N2).

2. The peer-to-peer communication system as claimed in claim 1, **characterized by** means configured in the second network element (N2) for requesting the transmission of the stored network-element-individual first message of the first network element (N1).

3. The peer-to-peer communication system as claimed in claim 2, **characterized by** means configured in the second network element (N2) for requesting a generic message in the case of a missing transmission of the stored network-element-individual first message of the first network element (N1).

4. The peer-to-peer communication system as claimed in any one of the preceding claims,
**characterized by** means configured in the second network element (N2) for accommodating and storing a second message transmitted during a communication relationship subsequent to the incoming communication request.

5. The peer-to-peer communication system as claimed in claim 4,
**characterized by** means configured in the second network element (N2) for transmitting the second message to the first network element.

6. The peer-to-peer communication system as claimed in any one of claims 4 to 5,
**characterized by** request means for requesting the transmission of the second message to the first network element (N1).

7. The peer-to-peer communication system as claimed in claim 6,
**characterized by** detection means for detecting available resources on the first network element (N1) and for acting on the request means to request the transmission of the second message to the first network element (N1).

8. A computer program product having program code for implementing a peer-to-peer communication system as claimed in any one of the preceding claims.

## Revendications

1. Système de communication pair-à-pair décentralisé fonctionnant comme assistant décentralisé d'absence, comprenant
- au moins deux éléments de réseau (N1, N2, N3, N4),
- une base de données décentralisée organisée répartie sur les au moins deux éléments de réseau (N1, N2, N3, N4),
- au moins un premier message propre à l'élément de réseau enregistré sur l'élément de réseau respectif (N1, N2, N3, N4) et à utiliser lors de l'acceptation d'une demande de communication,
et au niveau d'au moins un premier élément de réseau (N1) des au moins deux éléments de réseau, il est prévu
- des moyens de redirection d'une demande de communication entrante à un deuxième élément de réseau (N2) des au moins deux éléments de réseau pour le cas où en raison d'une pénurie de ressources au niveau du premier élément de réseau, celui-ci n'est pas en mesure de traiter la demande de communication,
- des moyens coopérant avec la base de données décentralisée pour la détermination du deuxième élément de réseau (N2) en tant que destination de redirection de la demande de communication et
- des moyens de transmission du premier message propre à l'élément de réseau enregistré du premier élément de réseau (N1) au deuxième élément de réseau (N2).

2. Système de communication pair-à-pair selon la revendication 1,
**caractérisé par**
des moyens aménagés dans le deuxième élément de réseau (N2) pour la demande de la transmission du premier message propre à l'élément de réseau enregistré du premier élément de réseau (N1).

3. Système de communication pair-à-pair selon la revendication 2,
**caractérisé par**
des moyens aménagés dans le deuxième élément de réseau (N2) pour la demande d'un message générique dans le cas d'une absence de transmission du premier message propre à l'élément de réseau enregistré du premier élément de réseau (N1).

4. Système de communication pair-à-pair selon l'une quelconque des revendications précédentes,
**caractérisé par**
des moyens aménagés dans le deuxième élément de réseau (N2) pour la réception et l'enregistrement d'un deuxième message transmis pendant une relation de communication faisant suite à la demande de communication entrante.

5. Système de communication pair-à-pair selon la revendication 4,
**caractérisé par**
des moyens aménagés dans le deuxième élément de réseau (N2) pour la transmission du deuxième message au premier élément de réseau.

6. Système de communication pair-à-pair selon l'une quelconque des revendications 4 à 5,
**caractérisé par**
des moyens de demande pour la demande de la transmission du deuxième message au premier élément de réseau (N1).

7. Système de communication pair-à-pair selon la revendication 6,
**caractérisé par**
des moyens de détection pour la détection des ressources disponibles sur le premier élément de réseau (N1) et pour l'action sur le moyen de demande pour la demande de la transmission du deuxième message au premier élément de réseau (N1).

8. Produit de programme informatique avec code de programme pour la réalisation d'un système de communication pair-à-pair selon l'une quelconque des revendications précédentes.
